# EUROPEAN PATENT APPLICATION

(11) **EP 3 240 096 A1**
(43) Date of publication of application: **01.11.2017**
(21) Application number: 16807652.9
(22) Date of filing: 12.02.2016
(51) Int. Cl.: H01M 10/42, H01M 10/48

(54) **BATTERY PACK PROTECTING SYSTEM AND METHOD**

(30) Priority: 09.06.2015 KR 20150081392
(71) Applicant: LG Chem, Ltd., Seoul 07336 (KR)
(72) Inventor: LEE, Jae-Chan, Daejeon 34122 (KR); KIM, Sooryoung, Daejeon 34122 (KR); KIM, Cheoltaek, Daejeon 34122 (KR)
(74) Representative: Cabinet Plasseraud
(86) International application number: PCT/KR2016/001413
(87) International publication number: WO 2016/200009

(57) **Abstract**

The present invention relates to a system and a method of protecting a battery pack, and the system includes: one or more battery packs including a plurality of cells; a switch unit configured to open and close a connection path between the one or more battery packs and an external power source; a detecting unit configured to measure a physical gradient of the one or more battery packs; and control unit configured to control an operation of the switch unit based on a measurement value of the detecting unit.

## Description

### [Technical Field]

This application claims priority to and the benefit of Korean Patent Application No. 10-2015-0081392 filed in the Korean Intellectual Property Office on June 9, 2015, the entire contents of which are incorporated herein by reference.

The present invention relates to a system and a method of protecting a battery pack, and more particularly, to a system and a method of protecting a battery pack, which measure a gradient of one or more battery packs, determine whether the measurement value exceeds a predetermined threshold gradient value, and control an operation of a switch provided on a connection path between the one or more battery packs and an external power source based on a result of the determination, thereby blocking a path of a power source supplied to a battery pack and preventing an accident, such as leakage of an electrolyte of the battery cell and an electrical short of a high voltage and a high current when the battery pack is abnormally inclined.

### [Background Art]

A battery is called as a storage battery or a secondary cell, and means a device storing or outputting electric energy generated by a chemical reaction between an electrolyte and an electrode existing within the battery.

The battery has a characteristic in an easy application according to a product group, excellent preservability, a high energy density, and the like. Further, the battery attracts attention as a new energy source for improving an environmentally-friendly characteristic and energy efficiency in that a by-product according to the use of energy is not generated, as well as a primary advantage in that it is possible to decrease the use of fossil fuel.

Accordingly, the battery is universally applied to an electric vehicle (EV) or an energy storage system (ESS) driven by an electrical driving source, including a portable device.

Particularly, the electric vehicle is on the rise as an alternative in an era in which a pollution problem becomes serious day by day and oil price is high, and in Korea, various businesses have been pushed forward for an entrance to the four world powers in an electric vehicle field up to the year of 2020.

The electric vehicle is propelled while driving an electric motor by using electric energy accumulated in the battery as a power source, unlike an existing vehicle, which obtains driving energy while combusting fossil fuel. That is, the battery may be considered as a core factor determining travelling of the electric vehicle, and a speed and a driving distance of the electric vehicle.

Accordingly, there are suggested the apparatuses for stably operating and protecting a battery, and for example, Korean Patent Application Laid-Open No. 2010-0115513 relates to a battery saver system for a vehicle, and describes the configuration, in which a main power source is controlled by sensing a voltage of a battery, thereby protecting a battery used in a vehicle.

The related art is configured to protect the battery from an electrical problem, such as overcharging and overdischarging, but passes over an accident incurable by a physical change of the battery.

For example, when a vehicle driven by a battery receives large impact or is turned over by an accident, the internal battery may deviate from an existing fixed position and be inclined, and in this case, a high voltage and a high current may leak from the battery to cause a failure of a battery pack or cause electric shock to a human body riding inside the vehicle.

That is, the battery for a vehicle is inclined by physical impact by a primary accident of the vehicle, and thus, a secondary accident, such as an electrical short, leakage of electrolyte, and electric shock, may be incurred.

Here, the related art detects only an electrical problem of the battery, but has a problem in failing to detect a physical change of the battery.

### [Detailed Description of the Invention]

### [Technical Problem]

The present invention is conceived to solve the aforementioned problem, and an object of the present invention is to provide a system and a method of protecting a battery pack, which measure a gradient of a battery pack, determine whether the measurement value exceeds a predetermined threshold gradient value, and control an operation of a switch provided on a connection path between the battery pack and an external power source based on a result of the determination, thereby blocking a path of a power source supplied to a battery pack and preventing an accident, such as leakage of an electrolyte of the battery cell and an electrical short of a high voltage and a high current when the battery pack is abnormally inclined.

Further, an object of the present invention is to provide a system and a method of protecting a battery pack, which blocks a power source path to a battery pack and controls peripheral devices, such as a fan, a cooling valve, and a motor, to be operated to be off when the battery pack is inclined while exceeding a threshold gradient value, thereby preventing unnecessary driving of the peripheral devices and power consumption.

### [Technical Solution]

An exemplary embodiment of the present invention provides a system for protecting a battery pack, including: one or more battery packs including a plurality of cells; a switch unit configured to open and close a connection path between the one or more battery packs and an external power source; a detecting unit configured to measure a physical gradient of the one or more battery packs; and a control unit configured to control an operation of the switch unit based on a measurement value of the detecting unit.

The switch unit may be formed of one or more of a field effect transistor FET and a relay.

The detecting unit may measure the gradient of the one or more battery packs by using a gradient measuring sensor at a predetermined time interval, and transmit the measurement value to the control unit.

The control unit may include: an algorithm, into which the measurement value received from the detecting unit is input, and from which a result value is output; and a driving driver configured to control an operation of the switch unit based on the result value of the algorithm.

The algorithm may include a command determining whether the measurement value exceeds a predetermined threshold gradient value.

When the measurement value exceeds the threshold gradient value, the algorithm may output a first result value, and when the measurement value does not exceed the threshold gradient value, the algorithm may output a second result value.

When the first result value is output from the algorithm, the driving driver may transmit an open operation signal to the switch unit, and when the second result value is output from the algorithm, the driving driver may transmit a close operation signal to the switch unit.

The driving driver may control an off operation of a separate peripheral device, and the separate peripheral device may be one of an air-cooling type fan and a water-cooling type cooling valve.

Another exemplary embodiment of the present invention provides a method of protecting a battery pack, including: measuring a physical gradient of the one or more battery packs formed of a plurality of cells; and controlling an operation of a switch provided on a connection path between the one or more battery packs and an external power source based on a measurement value of the measuring of the gradient.

The measuring of the gradient may include measuring the gradient of the one or more battery packs by using a gradient measuring sensor at a predetermined time interval, and controlling an operation of the switch based on the measurement value.

The controlling of the operation of the switch may include inputting the measurement value received from the measuring of the gradient to an algorithm and outputting a result value.

The algorithm may include a command determining whether the measurement value exceeds a predetermined threshold gradient value.

When the measurement value exceeds the threshold gradient value, the algorithm may output a first result value, and when the measurement value does not exceed the threshold gradient value, the algorithm may output a second result value.

The controlling of the operation of the switch may include controlling the switch to perform an open operation when the first result value is output from the algorithm, and controlling the switch to perform a close operation when the second result value is output from the algorithm.

### [Advantageous Effects]

According to one aspect of the present invention, it is possible to provide the system and the method for protecting a battery pack, which measure a gradient of a battery pack, determine whether the measurement value exceeds a predetermined threshold gradient value, and control a switch provided on a connection path between the battery pack and an external power source to perform an open operation when the measurement value exceeds the threshold gradient value.

Accordingly, it is possible to block a supply of power to the battery pack, which is abnormally inclined by impact, an accident, and the like, and prevent an accident, such as a leakage of electrolyte of a battery cell, and an electrical short of a high voltage and a high current.

Further, it is possible to block a supply of power to the battery pack and control peripheral devices of the battery pack to be operated off, thereby preventing unnecessary driving of the peripheral devices and decreasing power consumption.

### [Brief Description of Drawings]

FIG. 1 is a diagram schematically illustrating an electric vehicle, to which a system and a method of protecting a battery pack according to an exemplary embodiment of the present invention are applicable.
FIG. 2 is a diagram schematically illustrating a configuration of a system for protecting a battery pack according to an exemplary embodiment of the present invention.
FIG. 3 is a diagram schematically illustrating a circuit diagram of the system for protecting the battery pack according to the exemplary embodiment of the present invention.
FIG. 4 is a flowchart illustrating a method of protecting a battery pack according to an exemplary embodiment of the present invention.

### [Best Mode]

The present invention will be described in detail below with reference to the accompanying drawings. Herein, repeated descriptions and the detailed description of a publicly known function and configuration that may make the gist of the present invention unnecessarily ambiguous will be omitted. Exemplary embodiments of the present invention are provided so as to more completely explain the present invention to those skilled in the art. Accordingly, the shape, the size, etc., of elements in the figures may be exaggerated for more clear explanation.

Throughout the specification and the claims, unless explicitly described to the contrary, the word "include/comprise" and variations such as "includes/comprises" or "including/comprising" mean further including other constituent elements, not excluding the other constituent elements.

In addition, the term "... unit" described in the specification means a unit for processing at least one function and operation and may be implemented by hardware components or software components and combinations thereof.

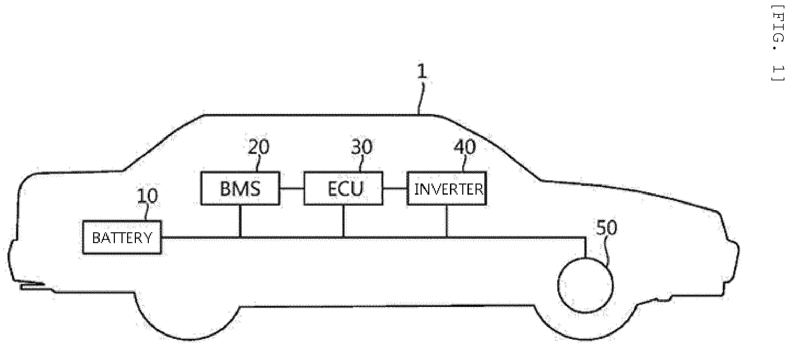

FIG. 1 is a diagram schematically illustrating an electric vehicle, to which a system and a method of protecting a battery pack according to an exemplary embodiment of the present invention are applicable.

However, it is noted that the system and the method of protecting the battery pack according to the exemplary embodiment of the present invention are applicable to various technical fields using a battery, in addition to an electric vehicle 1.

Referring to FIG. 1, the electric vehicle 1 may include a battery 10, a battery management system (BMS) 20, an electronic control unit (ECU) 30, an inverter 40, and a motor 50.

The battery 10 is an electric energy source providing driving force to the motor 50 and driving the electric vehicle 1, and may be charged or discharged by the inverter 40 according to the driving of the motor 50 and/or an internal combustion engine (not illustrated).

Here, the kind of battery 10 is not particularly limited, and examples of the battery 10 may include a lithium ion battery, a lithium polymer battery, a nickel cadmium battery, a nickel hydrogen battery, and a nickel zinc battery.

The BMS 20 may estimate a state of the battery 10 and control a charging/discharging current of the battery 10 by using information about the state, and further control an opening/closing operation of a contactor.

The ECU 30 is an electronic control device for controlling a state of the electric vehicle 1. For example, the ECU 30 determines a torque level based on information about an accelerator, a brake, a speed, and the like, and controls an output of the motor 50 to correspond to torque information.

The inverter 40 makes the battery 10 be charged or discharged based on a control signal of the ECU 30.

The motor 50 drives the electric vehicle 1 based on electric energy of the battery 10 and control information transmitted from the ECU 30.

As described above, the electric vehicle 1 is propelled while driving the motor 50 with the electric energy received from the battery 10, so that when a state of the battery 10 is abnormal, a failure and an accident of the electric vehicle 1 may be incurred.

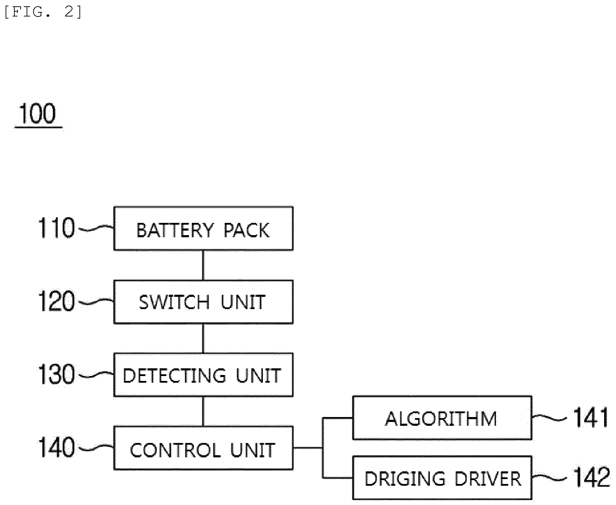

Accordingly, it is important to detect a state of the battery 10, appropriately control and protect the battery 10, and stably operate the battery 10, and hereinafter, the system and the method of protecting the battery pack according to the exemplary embodiment of the present invention will be described with reference to FIGS. 2 to 4.

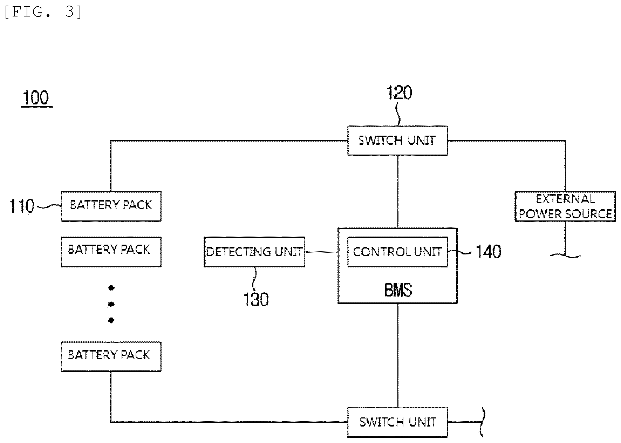

FIG. 2 is a diagram schematically illustrating a configuration of the system for protecting the battery pack according to the exemplary embodiment of the present invention, and FIG. 3 is a diagram schematically illustrating a circuit diagram of the system for protecting the battery pack according to the exemplary embodiment of the present invention.

Referring to FIGS. 2 and 3, the system 100 for protecting the battery pack according to the exemplary embodiment of the present invention may include a battery pack 110, a switch unit 120, a detecting unit 130, and a control unit 140.

However, the system 100 for protecting the battery pack illustrated in FIGS. 2 and 3 is an exemplary embodiment, and constituent elements thereof are not limited to the exemplary embodiment illustrated in FIGS. 2 and 3, and some constituent elements may be added, changed, or removed as necessary.

Further, the present invention is described based on the protection of the battery pack 110 as an exemplary embodiment, but the battery pack 110 is a concept including both a battery cell and a battery module, so that it is noted that the present invention is capable of protecting a battery cell and a battery module, as well as the battery pack 110.

The battery pack 110 includes a plurality of serially connected battery cells and battery modules, and one or more battery packs 110 are configured, and the battery pack 110 may serve to accumulate electric energy and supply the electric energy to an electric system.

As described above with reference to FIG. 1, the kind of battery forming the one or more battery packs 110 is not limited.

In this case, the one or more battery packs 110 are electrically connected with an external power source, and the switch unit 120 may be provided on a connection path.

Particularly, the switch unit 120 is installed between the one or more battery packs 110 and the external power source and is opened/closed according to the control signal of the control unit 140, which is to be described below, and the one or more battery packs 110 and the external power source may be connected or blocked by the open/close operation of the switch unit 120.

That is, when the switch unit 120 is operated to be opened, power supplied from the external power source is not transmitted to the one or more battery packs 110, and in contrast to this, when the switch unit 120 is operated to be closed, power of the external power source may be applied to the one or more battery packs 110.

The switch unit 120 is formed of one or more of a field effect transistor (FET) and a relay, and may be provided at an upper side and a lower side of the one or more battery packs 110.

However, it is noted that as long as the switch unit 120 performs the aforementioned function, the kind of contactor configuring the switch unit 120 is not limited, and may be variously selected.

The detecting unit 130 may be provided at one side of an internal side or an external side of the one or more battery packs 110 to serve to measure a physical gradient of the battery pack 110.

Referring to FIG. 3, it is illustrated that the single detecting unit 130 detects the one or more battery packs 110, but the number of provided detecting unit 130 may correspond to the number of one or more battery packs 110 and the detecting unit 130 may also measure a gradient of each of the one or more battery packs 110.

The detecting unit 130 includes a gradient measuring sensor therein as a measuring means, and measures a gradient of the one or more battery packs 110 at a predetermined time interval. For example, when a measurement time interval is set with two seconds, the detecting unit 130 may measure a gradient of the one or more battery packs 110 at a period of two seconds, and transmit the measurement value to the control unit 140 which is to be described below.

As described above, the configuration of measuring the gradient of the one or more battery packs 110 at the predetermined interval is for the purpose of rapidly responding to physical impact, which is applicable to the battery pack 110, in advance, and further, for the purpose of securing reliability of the measurement value through a re-measurement after the measurement.

The control unit 140 may serve to control an operation of the switch unit 120 based on the measurement value of the gradient of the one or more battery packs 110 measured by the detecting unit 130, and may be formed of a BMS itself, or may be included in the BMS.

Particularly, the control unit 140 may include an algorithm 141, into which the measurement value received from the detecting unit 130 is input and from which a result value is output, and a driving driver 142 controlling an operation of the switch unit 120.

In this case, a command determining the control of the operation of the switch unit 120 may be included in the algorithm 141, and may be, for example, a command determining whether the measurement value of the gradient of the one or more battery packs 110 measured by the detecting unit 130 exceeds a predetermined threshold gradient value.

Here, the algorithm 141 may output a first or second result value as a result of the performance of the command. That is, when the measurement value of the detecting unit 130 exceeds the threshold gradient value, the algorithm 141 may output the first result value, and when the measurement value of the detecting unit 130 does not exceed the threshold gradient value, the algorithm 141 may output the second result value.

The driving driver 142 may generate an open or close operation signal of the switch unit 120 based on the result value of the algorithm 141.

For example, the driving driver 142 may generate the open operation signal of the switch unit 120 for the first result value of the algorithm 141 and generate the close operation signal of the switch unit 120 for the second result value, and the generated signals may be transmitted to the switch unit 120.

The switch unit 120 performs the open or close operation according to the operation signal received from the driving driver 142, and blocks the supply of power to the one or more battery packs 110 during the open operation, thereby preventing various accidents incurable by the inclination of the battery pack 110. In contrast to this, during the close operation, the supply of power to the one or more battery packs 110 may be maintained.

In the meantime, the driving driver 142 may control the operation of the switch unit 120, and control peripheral external devices, such as an air-cooling type fan and a water-cooling type cooling valve, and circuit components of the one or more battery packs 110.

Particularly, when the first result value is output from the algorithm 141, the driving driver 142 may generate an off signal and transmit the generated off signal to the peripheral external device and the circuit component, and thus, when the one or more battery packs 110 are not driven, the driving driver 142 turns off the peripheral external device and the circuit component, of which the driving is not required, thereby preventing power consumption.

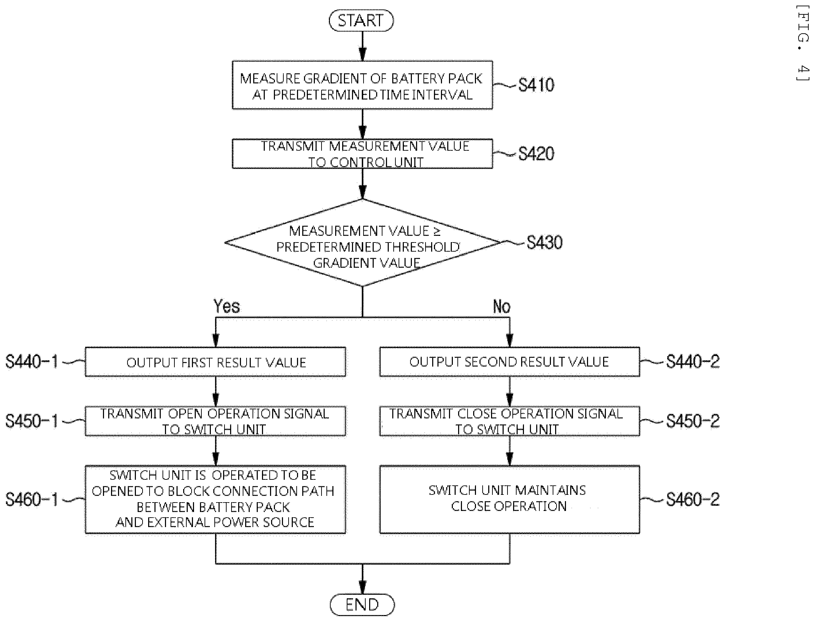

FIG. 4 is a flowchart illustrating a method of protecting a battery pack according to an exemplary embodiment of the present invention.

When the method of protecting the battery pack according to the exemplary embodiment of the present invention starts, first, the detecting unit measures a gradient of one or more battery packs by using the gradient measurement sensor at a predetermined time interval (5410).

The measured measurement value of the gradient is transmitted to the control unit (S420), and the control unit determines whether the measurement value exceeds a predetermined threshold gradient value of the battery pack through an algorithm (S430).

In this case when the measurement value exceeds the threshold gradient value, the algorithm outputs a first result value (S440-1), and in contrast to this, when the measurement value does not exceed the threshold gradient value, the algorithm outputs a second result value (S440-1).

The driving driver of the control unit transmits an open operation signal corresponding to the first result value to the switch unit (S450-1) and transmits a close operation signal corresponding to the second result value to the switch unit (S450-2).

When the switch unit receives the open operation signal from the driving driver, the switch unit performs the open operation and blocks a connection path between the one or more battery packs and an external power source (S460-1), and when the switch unit receives the close operation signal from the driving driver, the switch unit maintains the close operation and supplies power to the one or more battery packs (S460-2).

In the forgoing, the specific exemplary embodiment of the present invention has been illustrated and described, but it is apparent to those skilled in the art that the technical spirit of the present invention is not limited by the accompanying drawings and the described contents, and may be modified in various forms without departing from the spirit of the present invention, and the modifications are considered to belong to the claims of the present invention without departing from the spirit of the present invention.

## Claims

1. A system for protecting a battery pack, comprising:
one or more battery packs including a plurality of cells;
a switch unit configured to open and close a connection path between the one or more battery packs and an external power source;
a detecting unit configured to measure a physical gradient of the one or more battery packs; and
a control unit configured to control an operation of the switch unit based on a measurement value of the detecting unit.

2. The system of claim 1, wherein the switch unit comprises one or more of a field effect transistor FET and a relay.

3. The system of claim 1, wherein the detecting unit measures the gradient of the one or more battery packs by using a gradient measuring sensor at a predetermined time interval, and transmits the measurement value to the control unit.

4. The system of claim 3, wherein the control unit includes:
an algorithm, into which the measurement value received from the detecting unit is input, and from which a result value is output; and
a driving driver configured to control an operation of the switch unit based on the result value of the algorithm.

5. The system of claim 4, wherein the algorithm includes a command determining whether the measurement value exceeds a predetermined threshold gradient value.

6. The system of claim 5, wherein when the measurement value exceeds the threshold gradient value, the algorithm outputs a first result value, and when the measurement value does not exceed the threshold gradient value, the algorithm outputs a second result value.

7. The system of claim 6, wherein when the first result value is output from the algorithm, the driving driver transmits an open operation signal to the switch unit, and when the second result value is output from the algorithm, the driving driver transmits a close operation signal to the switch unit.

8. The system of claim 7, wherein the driving driver controls an off operation of a separate peripheral device, and
the separate peripheral device is one of an air-cooling type fan and a water-cooling type cooling valve.

9. A method of protecting a battery pack, comprising:
measuring a physical gradient of the one or more battery packs formed of a plurality of cells; and
controlling an operation of a switch provided on a connection path between the one or more battery packs and an external power source based on a measurement value of the measuring of the gradient.

10. The method of claim 9, wherein the measuring of the gradient includes measuring the gradient of the one or more battery packs by using a gradient measuring sensor at a predetermined time interval, and controlling an operation of the switch based on the measurement value.

11. The method of claim 10, wherein the controlling of the operation of the switch includes inputting the measurement value received from the measuring of the gradient to an algorithm and outputting a result value.

12. The method of claim 11, wherein the algorithm includes a command determining whether the measurement value exceeds a predetermined threshold gradient value.

13. The method of claim 12, wherein when the measurement value exceeds the threshold gradient value, the algorithm outputs a first result value, and when the measurement value does not exceed the threshold gradient value, the algorithm outputs a second result value.

14. The method of claim 13, wherein the controlling of the operation of the switch includes controlling the switch to perform an open operation when the first result value is output from the algorithm, and controlling the switch to perform a close operation when the second result value is output from the algorithm.
